# EUROPÄISCHE PATENTSCHRIFT

(11) **EP 3 252 923 B1**
(45) Veröffentlichungstag und Bekanntmachung des Hinweises auf die Patenterteilung: **27.11.2019**
(21) Anmeldenummer: 16171930.7
(22) Anmeldetag: 30.05.2016
(51) Int. Cl.: H02K 1/14, H02K 3/52, H02K 15/06, H02K 21/14, H02K 26/00

(54) **ZWEI-PHASEN ELEKTROMOTOR**
TWO-PHASE ELECTRIC MOTOR
MOTEUR ELECTRIQUE BIPHASIQUE

(43) Veröffentlichungstag der Anmeldung: 06.12.2017
(73) Patentinhaber: Magna Auteca GmbH, 8160 Krottendorf bei Weiz (AT)
(72) Erfinder: KOBLER, Ralf, 4040 Linz (AT); WEIDENHOLZER, Günther, 4152 Sarleinsbach (AT)
(74) Vertreter: Zangger, Bernd

(56) Entgegenhaltungen:
- EP-A1- 0 116 379
- DE-A1-102009 046 681
- GB-A- 2 495 547
- JP-A- H08 186 972
- JP-A- S61 236 356
- JP-A- 2004 236 487
- US-A- 4 017 776
- US-A- 5 627 424
- US-A1- 2006 244 333
- US-A1- 2012 248 927

## Beschreibung

### Gebiet der Erfindung

Die vorliegende Erfindung betrifft einen Zwei-Phasen Elektromotor und einen Klimaantrieb eines Kraftfahrzeuges umfassend einen solchen Zwei-Phasen Elektromotor.

### Stand der Technik

Es ist bekannt zur Aktuierung von Klimaklappen in einem Kraftfahrzeug Elektromotoren als Stellantriebe zu nutzen. Hierzu werden unter anderen dreiphasige Motoren verwendet, wobei beispielsweise drei Spulen auf einem Blechpaket als Stator angeordnet sein können und ein zentraler Rotor als Permanentmagnet ausgeführt sein kann. Derartige Stellantriebe sollen aufgrund sehr beengter Bauraumverhältnisse bei gegebenem Drehmoment meist möglichst klein gebaut werden können.

An sich bekannt sind auch Zwei-Phasen Elektromotoren, die als elektrisch kommutierte Permanentmagnet-Elektromotoren ausgebildet sind. Solche Zwei-Phasen Elektromotoren sind beispielsweise in der DE 3149943 C2, der EP 0 084 198 A1, der EP 1 571 749 A1 sowie der US 6,043,574 offenbart.

Die JP H08 186972 A offenbart einen Schrittmotor mit Statoren an beiden Enden einer gemeinsamen rotierenden Welle, wobei jeder Stator mit einem Paar von Polen ausgestattet ist.

Aus der GB 2 495 547 A ist ein bürstenloser Motor bekannt, der einen vierpoligen Permanentmagnetläufer und einen vierpoligen Stator umfasst. Der Stator umfasst zwei C-förmige Statorelemente, die auf gegenüberliegenden Seiten des Läufers angeordnet sind.

Die US 4 017 776 A offenbart einen reversiblen Spaltpolmotor mit einem laminierten Stator, der um die horizontale und vertikale magnetische Achse symmetrisch ist. Die Laminatform entspricht zwei T, die gegeneinander angeordnet sind. In der Mitte gibt es ein kreisförmiges Loch zur Aufnahme eines Kurzschlussläufers. Zwei Seitenteile, auf welche jeweils zwei Spulen aufgeschoben sind, werden bei der Herstellung in den laminierten Stator gepresst.

Die JP S61 236356 A offenbart eine Herstellung eines Stators, wobei im Voraus ein erster Trennschlitz am inneren Umfang einer Statorplatte bereitgestellt wird, eine Mehrzahl der Platten zwischen oberen und unteren Gehäuseteilen laminiert wird und zweite Trennschlitze geschnitten werden.

### Zusammenfassung der Erfindung

Es ist eine Aufgabe der Erfindung, einen Zwei-Phasen Elektromotor anzugeben der eine geringe Baugröße bei hohem Drehmoment aufweist. Eine weitere Aufgabe ist es, eine Klimaklappe eines Kraftfahrzeuges anzugeben mit einem derartigen Elektromotor als kleinbauendem Stellmotor.

Die Lösung der Aufgabe erfolgt durch einen Zwei-Phasen Elektromotor nach Anspruch 1.

Hierbei können die beiden Spulen einer Phase seriell oder parallel verschaltet sein.

Erfindungsgemäß werden vier Spulen verwendet um einen Zwei-Phasen-Motor zu bilden, wobei die Spulen im Rechteck angeordnet sind und die jeweils diagonal gegenüberliegenden Spulen miteinander verbunden sind. Der Rotor ist zentral zwischen den Spulen angeordnet und diametral zweipolig magnetisiert. Es hat sich herausgestellt, dass auf diese Weise der Elektromotor sehr kompakt bauend ausgebildet werden kann und ein größtmögliches Verhältnis zwischen Rotordurchmesser (groß) zu Statorbreite (klein) erreicht werden kann.

Die Anordnung des Elektromotors und der Spulen im "Rechteck" soll dabei die Sonderform eines Quadrats nicht ausschließen. Der Rotor liegt bevorzugt im Zentrum des Rechtecks, das die Spulen bilden.

Vorzugsweise sind die Spulen so gewickelt und verschaltet, dass wenn in einer Spule in einem dem Rotor abgewandten Querschnitt sich ein Stromfluss in einer ersten Richtung einstellt, bei der zur selben Phase gehörigen diagonal angeordneten Spule sich ein Stromfluss, in einem dem Rotor zugewandten Querschnitt der Spule, in die gleiche, erste Richtung einstellt. Beispielweise kann, wenn der Stromfluss in einem vom Rotor abgewandten Querschnitt einer Spule in einer ersten, positiven Richtung, entlang der Rotorachse verläuft, der Stromfluss einer gegenüberliegenden Spule in einem dem Rotor zugewandten Querschnitt ebenfalls in der ersten, positiven Richtung verlaufen, der Stromfluss dieser gegenüberliegenden Spule in einem vom Rotor abgewandten Querschnitt jedoch in der der ersten positiven Richtung entgegengesetzten, negativen Richtung verlaufen.

Zwei Polschuhe sind erfindungsgemäß mittig zwischen der ersten Seite und der zweiten Seite des Rotors ausgebildet, wobei, in einer Draufsicht auf das Rechteck, insbesondere eine Verbindungslinie zwischen den Mittelpunkten der beiden Polschuhe im rechten Winkel zu einer Verbindungslinie zwischen den Mittelpunkten der beiden Seiten des Rotors liegt. An den besagten Seiten des Rotors sind erfindungsgemäß zwei weitere Polschuhe angeordnet, so dass insgesamt vier Polschuhe den Rotor über einen Großteil seines Umfangs umgreifen. Die vier Polschuhe sind dann in Form eines Plus-Zeichens "+" zueinander angeordnet, wobei in den Diagonalen, also "x"-förmig, die Spulen angeordnet sind. Die beiden seitlichen Polschuhe gehen erfindungsgemäß einstückig in die die Spulen tragenden Seitenteile des Stators über.

Erfindungsgemäß ist der Stator mehrteilig aufgebaut und umfasst einen Mittelteil, sowie einen ersten Seitenteil und einen zweiten Seitenteil, wobei der erste Seitenteil zur Aufnahme der ersten und zweiten Spule an der ersten Seite des Rotors ausgebildet ist und der zweite Seitenteil zur Aufnahme der dritten und vierten Spule an der zweiten Seite des Rotors ausgebildet ist. Hierdurch können die Spulen unabhängig vom Stator-Mittelteil auf deren Spulenkörper gewickelt werden.

Bevorzugt ist der Stator aus Blechen aufgebaut. Bei einem mehrteiligen Stator ist bevorzugt zumindest das Mittelteil, besonders bevorzugt auch die Seitenteile aus Blechen aufgebaut. Die Seitenteile können auch als Eisenkerne ausgeführt sein. Die Seitenteile sind in das Mittelteil eingepresst. Vorzugsweise sind die Verbindungen zwischen den Blechen gezinkt ausgeführt.

In einer anderen Ausführungsform kann der Stator aus Pressteilen, insbesondere Sinterteilen, aufgebaut sein. Dabei bilden die Seitenteile, die jeweils zwei Spulen aufnehmen, auch jeweils einen seitlichen Polschuh aus.

Eine Klimaklappe eines Kraftfahrzeuges, umfassend einen Elektromotor als Stellantrieb, ist bevorzugt mit einem beschriebenen Zwei-Phasen Elektromotor als Stellmotor ausgebildet, so dass der Stellantrieb der Klimaklappe besonders klein baut.

### Kurzbeschreibung der Zeichnungen

Die Erfindung wird im Folgenden beispielhaft unter Bezugnahme auf die Zeichnungen beschrieben.
- Fig. 1: ist eine schematische Draufsicht auf einen erfindungsgemäßen Zwei-Phasen Elektromotor.
- Fig. 2a und 2b: ist eine dreidimensionale Explosionsdarstellung (a) und Darstellung im zusammengebauten Zustand (b) eines nicht erfindungsgemäßen Zwei-Phasen Elektromotors.
- Fig. 3a und 3b: ist eine dreidimensionale Explosionsdarstellung (a) und Darstellung im zusammengebauten Zustand (b) eines erfindungsgemäßen Zwei-Phasen Elektromotors.
- Fig. 4a und 4b: ist eine dreidimensionale Explosionsdarstellung (a) und Darstellung im zusammengebauten Zustand (b) eines nicht erfindungsgemäßen Zwei-Phasen Elektromotors.
- Fig. 5a und 5b: ist eine dreidimensionale Explosionsdarstellung (a) und Darstellung im zusammengebauten Zustand (b) eines nicht erfindungsgemäßen Zwei-Phasen Elektromotors.
- Fig. 6a und 6b: ist eine Ansicht von vorne (a) und eine dreidimensionale Ansicht (b) eines Spulenträgers eines nicht erfindungsgemäßen Zwei-Phasen Elektromotors in einem ersten Zustand.
- Fig. 6c und 6d: ist eine Ansicht von vorne (c) und eine dreidimensionale Ansicht (d) des Spulenträgers gemäß Fig. 6a und 6b in einem zweiten Zustand.
- Fig. 7a und 7b: zeigen Schritte beim Zusammenbau eines nicht erfindungsgemäßen Zwei-Phasen Elektromotors mit einem Spulenträger gemäß Fig. 6a bis 6d.

### Detaillierte Beschreibung der Erfindung

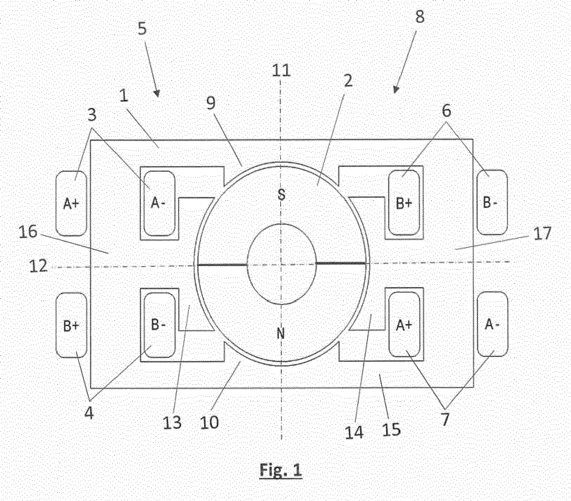

In Fig. 1 ist ein erfindungsgemäßer Zwei-Phasen Elektromotor schematisch in einer Draufsicht dargestellt.

Der Zwei-Phasen Elektromotor umfasst einen spulentragenden Stator 1 und einen zweipolig permanentmagnetisierten Rotor 2. Insgesamt weist der Elektromotor eine rechteckige Bauform auf.

Eine erste Spule 3 und eine zweite Spule 4 sind an einer ersten Seite 5 - in der Fig. 1 links - des Rotors 2 angeordnet und eine dritte Spule 6 und eine vierte Spule 7 an der, der ersten Seite 5 gegenüberliegenden, zweiten Seite 8 - in der Fig. 1 rechts - des Rotors 2 angeordnet. Die vier Spulen 3, 4, 6 und 7 bilden zusammen ein Rechteck, wobei jeweils die diagonal gegenüberliegend angeordneten Spulen, das sind einerseits die erste Spule 3 und die vierte Spule 7 sowie andererseits die zweite Spule 4 und die dritte Spule 6, jeweils miteinander elektrisch verbunden sind, so dass sie jeweils eine gemeinsame Phase, nämlich die Phase A bzw. Phase B, bilden.

Die Spulen 3,7,4,6 sind so gewickelt und verschaltet, dass wenn in einer Spule 3,7,4,6 in einem dem Rotor 2 abgewandten Querschnitt sich ein Stromfluss in einer ersten Richtung + (aus der Bildebene heraus) oder - (in die Bildebene hinein) einstellt, bei der zur selben Phase A, B gehörigen diagonal angeordneten Spule 3,7,4,6 sich ein Stromfluss, in einem dem Rotor 2 zugewandten Querschnitt der Spule 3,7,4,6, in die gleiche, erste Richtung + oder - einstellt.

Insbesondere ist beispielsweise der Stromfluss in einem vom Rotor 2 abgewandten Querschnitt der Spule 3 in der ersten, positiven Richtung, +, nämlich aus der Bildebene der Fig. 1 heraus ausgerichtet, der Stromfluss der gegenüberliegenden Spule 7 in einem dem Rotor zugewandten Querschnitt ebenfalls in der ersten, positiven Richtung + verlaufend, der Stromfluss dieser gegenüberliegenden Spule 7 in einem vom Rotor abgewandten Querschnitt jedoch in der der ersten positiven Richtung + entgegengesetzten, negativen Richtung - verlaufend.

Die Spulen einer Phase können vorzugsweise in einer Weise gewickelt und/oder verschaltet sein, sodass sich bei einer beispielhaften Bestromung der Phasen der Spulenstrom entsprechend Fig. 1 ausbildet. Hierbei beschreibt der Buchstabe A, B die jeweilige Phase und die Polarität +, - die Richtung des Stromflusses, "+" aus der Bildebene heraus und "-" in die Bildebene hinein.

Die Spulen 3, 4, 6, 7 sind also links und rechts des Rotors 2 angebracht, wobei die diagonal angeordneten Spulen miteinander verbunden sind. Der Rotor 2 ist diametral zweipolig magnetisiert. Der Motor baut sehr schmal und man erreicht durch diese Anordnung ein größtmögliches Verhältnis zwischen Rotordurchmesser zu Statorbreite. Erfindungsgemäß ist der Stator 1 mehrteilig ausgeführt. Hierdurch können die Spulen 3, 4, 6, 7 unabhängig vom Stator 1 auf einer Spindel gewickelt werden.

Die zwei Polschuhe 9 und 10 sind mittig zwischen der ersten Seite 5 und der zweiten Seite 8 des Rotors 2 ausgebildet, wobei in Draufsicht eine Verbindungslinie 11 zwischen den Mittelpunkten der beiden Polschuhe 9 und 10 im rechten Winkel zu einer Verbindungslinie 12 zwischen den Mittelpunkten der beiden Seiten 5, 8 des Rotors 2 liegt. An den Seiten 5 und 8 des Rotors 2 sind zwei weitere Polschuhe 13 und 14 angeordnet. Der Elektromotor ist damit symmetrisch aufgebaut, in einer Rechteckform, wobei der Rotor 2 im Zentrum des Rechtecks liegt.

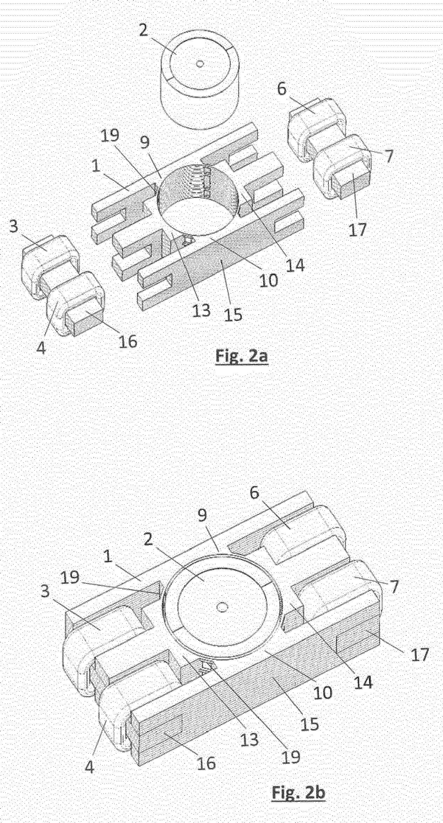

Fig. 2a und 2b zeigen eine nicht erfindungsgemäße Ausführungsvariante mit geblechtem Stator 1. Die Polschuhe 9, 10, 13, 14 des Mittelteils 15 des Stators 1 sind mit kleinen Stegen 19 miteinander verbunden. Die Spulenkörper werden auf eigenen Eisenkernen als Seitenteilen 16, 17 des Stators 1 aufgeschoben und dann seitlich in den Mittelteil 15, der die Polschuhe beinhaltet, eingepresst.

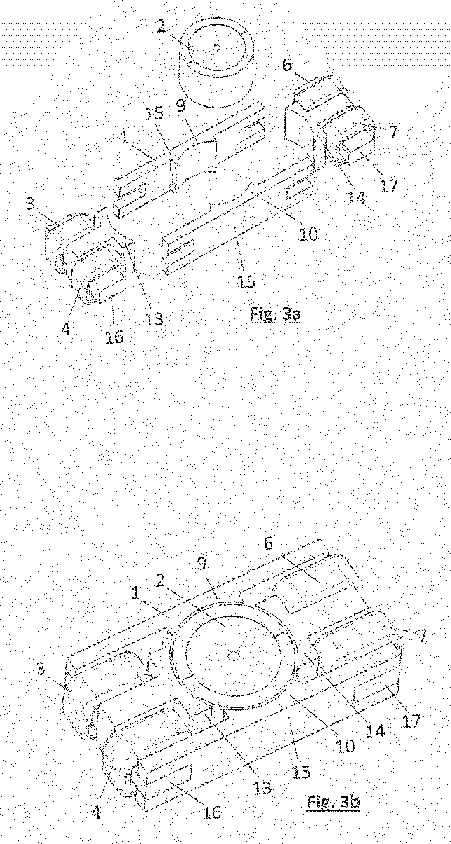

Wie in Fig. 3a und 3b gezeigt, ist es auch möglich, die Teile des Stators 1 zu pressen (sintern). Hierzu werden erfindungsgemäß die Spulen 3, 4 bzw. 6, 7 auf je einen Polschuh 13 bzw. 14 geschoben der einteilig in ein Seitenteil 16 bzw. 17 des Stators übergeht und diese Seitenteile 16, 17 mit zwei Mittelteilen 15 des Stators verpresst, die die beiden anderen Polschuhe 9 bzw. 10 ausbilden. Der Stator 1 besteht somit aus vier Teilen, die jeweils einen Polschuh ausbilden. Vorteilhaft an den Ausführungen, wie sie in Fig. 2a, 2b, 3a und 3b dargestellt sind, ist die Ausbildung der Seitenteile die ein "Versenken" der Spulenköpfe ermöglichen - d.h. die Spulenköpfe überragen das Blechpaket in Richtung der Drehachse des Rotors nicht bzw. nur geringfügig. Dadurch lässt sich zusätzlich zur kompakten Außenkontur, trotz großer Rotoraußenfläche, eine geringe Bauhöhe, insbesondere in axialer Richtung, erzielen.

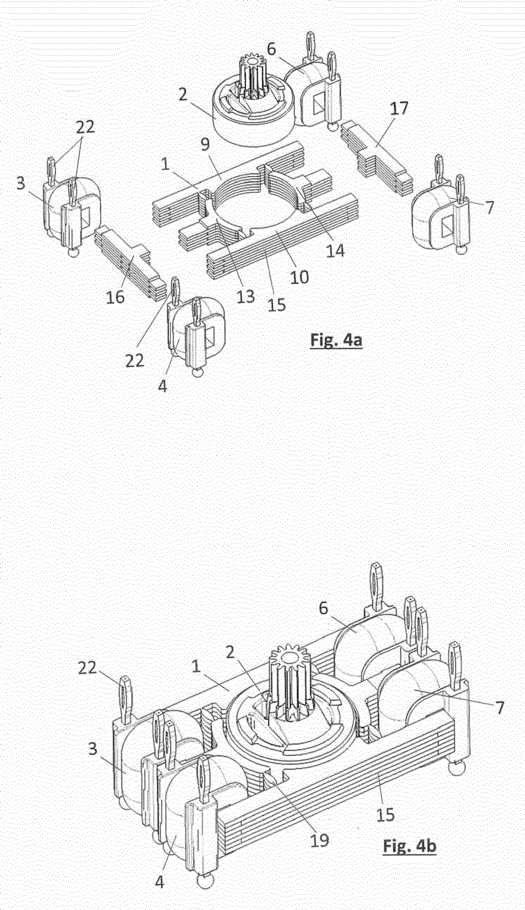

Eine nicht erfindungsgemäße Ausführungsform mit geblechtem Stator 1 ist in Fig. 4a und 4b dargestellt. Dabei gibt es eine gezinkte Verbindung zwischen den Einzelteilen des Stators 1. Der Spulendraht ist hierbei auf Kunststoffspulenkörpern aufgewickelt. Die Spulenkörper übernehmen die Isolation zum Blech des Stators 1, insbesondere zu den Seitenteilen 16 und 17. In die Spulenkörper sind ferner Presskontakte 22 zur Verbindung mit einer Leiterplatte miteingespritzt. Der Spulendraht wird, nachdem der Wickelvorgang abgeschlossen ist, an den Presskontakten 22 angeschweißt. Gezeigt ist ebenfalls der Rotor 2 welcher in dieser Ausführungsform durch ein unmittelbar am Rotor 2 aufsitzendes, bevorzugt mit dem Rotor 2 einstückiges, Getriebe-Zahnrad ein integraler Teil eines Getriebes, insbesondere eines Klimaklappenstellers, ist.

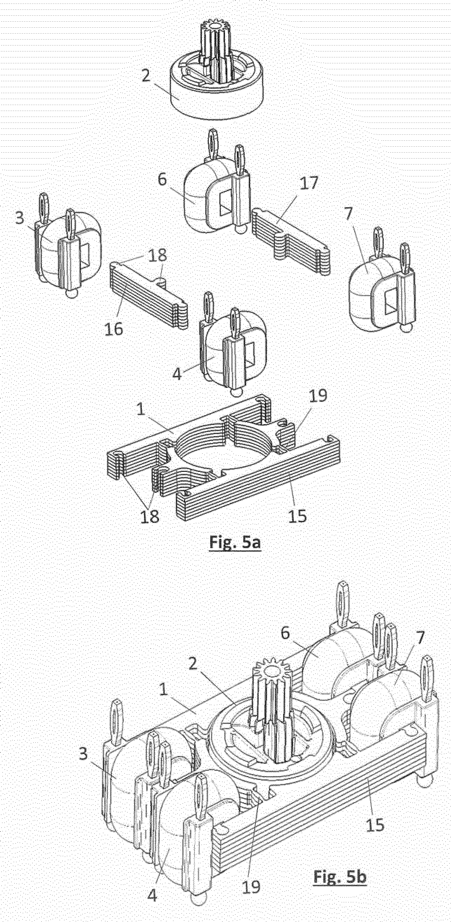

Fig. 5a und 5b zeigen eine weitere nicht erfindungsgemäße Ausführungsform eines geblechten Stators 1. Hier sind alle Polschuhe einteilig in einem zentralen Mittelteil 15 angeordnet, wobei die Polschuhe mit dünnen Stegen 19 miteinander verbunden sind. Vier Spulenkörper werden auf die Seitenteile 16, 17 seitlich aufgeschoben und anschließend in Richtung der Drehachse des Rotors 2 miteinander verpresst. Hierdurch wird ein guter Zusammenhalt der Einzelteile nach Montage erreicht. Es ist auch möglich anschließend die Verbindungsstege 19, die einen magnetischen Kurzschluss darstellen, zwischen den Polschuhen herauszutrennen. Ein wesentlicher Vorteil dieser Variante ist, dass es nur zwei unterschiedliche Blechschnitte gibt.

Die Seitenteile 16, 17 und der Mittelteil 15 des Stators 1 weisen nut- und federartige Ausformungen 18 auf, so dass die Seitenteile 16, 17 auf das Mittelteil 15 puzzleartig axial aufgeschoben werden können, wobei "axial" wieder die Drehachse des Rotors 2 bezeichnet.

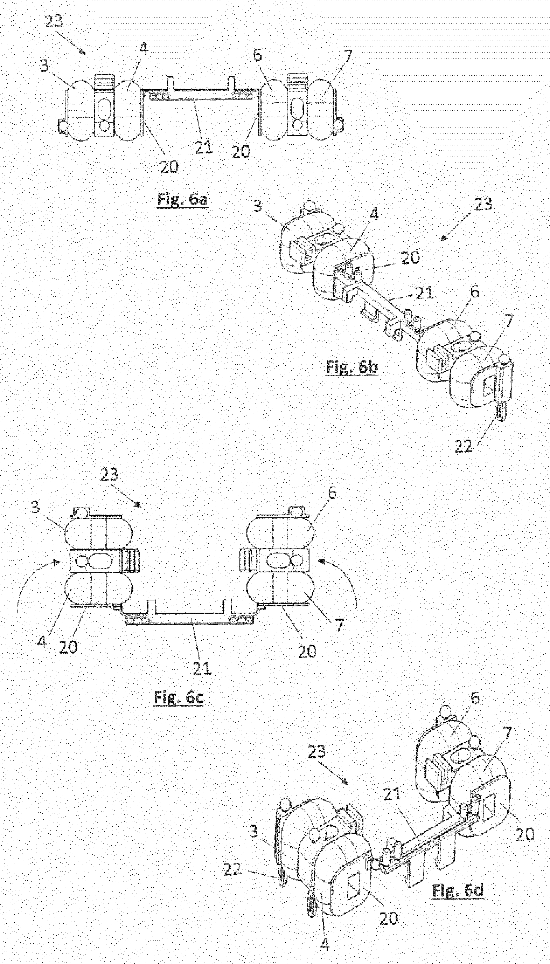

Fig. 6a bis 6d zeigen eine nicht erfindungsgemäße Ausführungsform eines Spulenträgers 23 eines Stators 1, wobei der Spulenträger 23 jeweils zwei außen liegende Spulenaufnahmen 20 umfasst und einen mittigen Verbindungskörper 21, wobei der Verbindungskörper 21 mit den Spulenaufnahmen 20 mittels Scharnieren verbunden ist. Der Spulenträger 23 ist aus Kunststoff ausgebildet. Der Kunststoffteil ist so ausgeführt, dass alle Spulen 3, 4, 6, 7 in einer Stellung des Spulenträgers 23 - wie in Fig. 6a und 6b gezeigt - dieselbe Drehachse aufweisen. Der Spulenträger 23 kann in der Wickelmaschine auf eine einzelne Spindel aufgeschoben werden und mit mehreren Wickelköpfen bewickelt werden. Anschließend wird der Spulenträger 23 an besonders ausgeformten Dünnstellen, also Filmscharnieren, abgewinkelt und erreicht über eine Bewegung, wie durch die Pfeile in Fig. 6c angedeutet, eine Endstellung wie in Fig. 6c und 6d dargestellt. Der Verbindungskörper 21 zwischen den Spulenaufnahmen 20 dient auch der Drahtführung - der Motor besitzt damit eigentlich nur zwei Spulen die jeweils aufgeteilt gewickelt sind. Ein Vorteil dieser Ausführung ist, dass nur mehr insgesamt vier Presskontakte 22 notwendig sind.

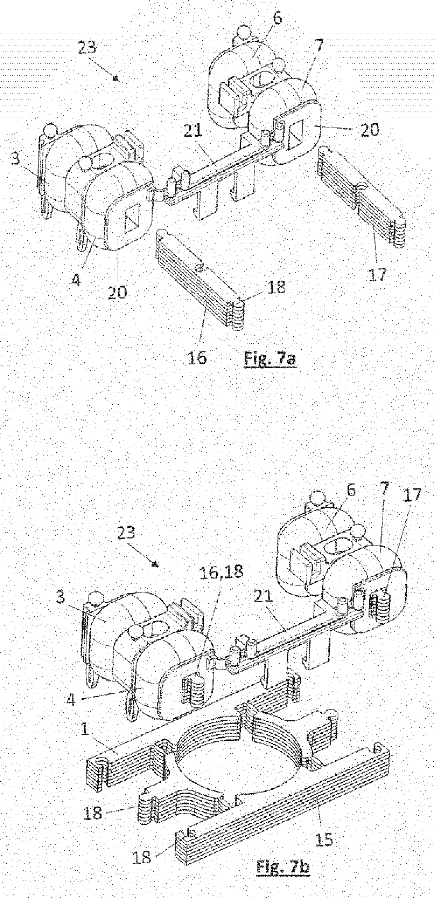

Fig. 7a und 7b zeigt die weitere Zusammenbaureihenfolge des Elektromotors. Zuerst werden die Seitenteile 16 und 17 des Stators 1 in den Spulenträger 23 eingeschoben, und zwar jeweils durch Öffnungen in den Spulenaufnahmen 20. Anschließend werden die Seitenteile 16, 17 mit dem Mittelteil 15 des Stators 1 verpresst, wieder unter Ausnutzung von Ausformungen 18, die ein puzzleartiges Ineinanderstecken von Seitenteilen 16, 17 und Mittelteil 15 des Stators 1 und somit einen Formschluss zwischen den Bauteilen ermöglichen. Am Verbindungskörper 21 sind zudem Schnapphaken ausgebildet, zur besseren Befestigung des Spulenträgers 23 am Mittelteil 15 des Stators 1.

### Bezugszeichenliste

- 1: Stator
- 2: Rotor
- 3: erste Spule
- 4: zweite Spule
- 5: erste Seite
- 6: dritte Spule
- 7: vierte Spule
- 8: zweite Seite
- 9: Polschuh
- 10: Polschuh
- 11: Verbindungslinie
- 12: Verbindungslinie
- 13: Polschuh
- 14: Polschuh
- 15: Mittelteil
- 16: erstes Seitenteil
- 17: zweites Seitenteil
- 18: Ausformung
- 19: Steg
- 20: Spulenaufnahmen
- 21: Verbindungskörper
- 22: Press-Fit Kontakt
- 23: Spulenträger

- A: Phase
- B: Phase
- +: positive Stromflussrichtung (aus der Bildebene heraus)
- -: negative Stromflussrichtung (in die Bildebene hinein)
- N: Nordpol
- S: Südpol

## Patentansprüche

1. Zwei-Phasen Elektromotor, umfassend einen spulentragenden Stator (1) und einen Rotor (2), wobei der Elektromotor eine rechteckige Bauform aufweist, wobei eine erste Spule (3) und eine zweite Spule (4) an einer ersten Seite (5) des Rotors (2) angeordnet sind und eine dritte Spule (6) und eine vierte Spule (7) an der, der ersten Seite (5) gegenüberliegenden, zweiten Seite (8) des Rotors (2) angeordnet sind, so dass die vier Spulen (3, 4, 6, 7) zusammen ein Rechteck bilden, wobei jeweils die diagonal gegenüberliegend angeordneten Spulen, das sind einerseits die erste Spule (3) und die vierte Spule (7) sowie andererseits die zweite Spule (4) und die dritte Spule (6), jeweils miteinander elektrisch verbunden sind, so dass sie jeweils eine gemeinsame Phase (A, B) bilden, wobei zwei Polschuhe (9, 10) mittig zwischen der ersten Seite (5) und der zweiten Seite (8) des Rotors (2) ausgebildet sind, wobei eine Verbindungslinie (11) zwischen den Mittelpunkten der beiden Polschuhe (9, 10) im rechten Winkel zu einer Verbindungslinie (12) zwischen den Mittelpunkten der beiden Seiten (5, 8) des Rotors (2) liegt, wobei an den Seiten (5, 8) des Rotors (2) zwei weitere, seitliche Polschuhe (13, 14) angeordnet sind, so dass insgesamt vier Polschuhe (9, 10, 13, 14) den Rotor (2) über einen Großteil seines Umfangs umgreifen, wobei
- der Stator (1) mehrteilig aufgebaut ist und einen ersten Seitenteil (16) und einen zweiten Seitenteil (17) umfasst, wobei der erste Seitenteil (16) zur Aufnahme der ersten und zweiten Spule (3, 4) an der ersten Seite (5) des Rotors (2) ausgebildet ist und der zweite Seitenteil (17) zur Aufnahme der dritten und vierten Spule (6, 7) an der zweiten Seite (8) des Rotors (2) ausgebildet ist,
**dadurch gekennzeichnet, dass**
- der Elektromotor ein elektrisch kommutierter Permanentmagnet-Elektromotor ist, wobei der Rotor (2) zweipolig permanentmagnetisiert ist,
- der mehrteilige Stator (1) ferner zwei Mittelteile (15) umfasst, die jeweils einen der mittig zwischen der ersten Seite (5) und der zweiten Seite (8) des Rotors (2) angeordneten Polschuhe (9, 10) ausbilden, und
- die Spulen (3, 4) an der ersten Seite (5) des Rotors (2) und die Spulen (6, 7) an der zweiten Seite (8) des Rotors (2) auf je einem der seitlichen Polschuhe (13, 14) angeordnet sind, die jeweils einteilig in einen der Seitenteile (16, 17) des Stators übergehen,
- die Seitenteile (16, 17) mit den Mittelteilen (15) des Stators verpresst sind, und
- die Seitenteile (16, 17) so ausgebildet sind, dass die Spulen (3, 7, 4, 6) einen Eisenkern des Stators (1) in Richtung der Rotordrehachse nicht überragen.

2. Zwei-Phasen Elektromotor nach Anspruch 1,
**dadurch gekennzeichnet, dass** die Spulen (3,7,4,6) so gewickelt und verschaltet sind, dass wenn in einer Spule (3,7,4,6) in einem dem Rotor (2) abgewandten Querschnitt sich ein Stromfluss in einer ersten Richtung (+, -) einstellt, bei der zur selben Phase (A, B) gehörigen diagonal angeordneten Spule (3,7,4,6) sich ein Stromfluss, in einem dem Rotor (2) zugewandten Querschnitt der Spule (3,7,4,6), in die gleiche, erste Richtung (+, -) einstellt, so dass beispielweise wenn der Stromfluss in einem vom Rotor (2) abgewandten Querschnitt einer Spule (3) ein Stromfluss in der ersten positiver (+) Richtung einstellt, so ist der Stromfluss der Spule (7) im dem Rotor (2) zugewandten Querschnitt ebenfalls positiv (+).

3. Zwei-Phasen Elektromotor nach zumindest einem der vorhergehenden Ansprüche,
**dadurch gekennzeichnet, dass** der Stator (1) aus Blechen aufgebaut ist, wobei vorzugsweise die Verbindungen zwischen den Blechen gezinkt ausgeführt sind.

4. Zwei-Phasen Elektromotor nach zumindest einem der vorhergehenden Ansprüche,
**dadurch gekennzeichnet, dass** der Stator (1) aus Pressteilen, insbesondere Sinterteilen, aufgebaut ist.

5. Klimaklappe eines Kraftfahrzeuges, umfassend einen Elektromotor als Stellantrieb,
**dadurch gekennzeichnet, dass** der Elektromotor als Stellantrieb der Klimaklappe durch einen Zwei-Phasen Elektromotor nach zumindest einem der vorhergehenden Ansprüche gebildet ist.

## Claims

1. Two-phase electric motor comprising a coil-carrying stator (1) and a rotor (2), wherein the electric motor has a rectangular design, wherein a first coil (3) and a second coil (4) are arranged on a first side (5) of the rotor (2) and a third coil (6) and a fourth coil (7) are arranged on the second side (8) of the rotor (2), which second side is situated opposite the first side (5), so that the four coils (3, 4, 6, 7) together form a rectangle, wherein in each case the coils which are arranged diagonally opposite each other, that is to say firstly the first coil (3) and the fourth coil (7) and secondly the second coil (4) and the third coil (6), are respectively electrically connected to one another, so that they each form a common phase (A, B), wherein two pole shoes (9, 10) are formed centrally between the first side (5) and the second side (8) of the rotor (2), wherein a connecting line (11) between the midpoints of the two pole shoes (9, 10) lies at a right angle to a connecting line (12) between the midpoints of the two sides (5, 8) of the rotor (2), wherein two further, lateral pole shoes (13, 14) are arranged on the sides (5, 8) of the rotor (2), so that a total of four pole shoes (9, 10, 13, 14) engage around the rotor (2) over a large portion of its circumference, wherein
- the stator (1) is of multipartite construction and comprises a first side part (16) and a second side part (17), wherein the first side part (16) is designed for receiving the first and the second coil (3, 4) on the first side (5) of the rotor (2), and the second side part (17) is designed for receiving the third and the fourth coil (6, 7) on the second side (8) of the rotor (2),
**characterized in that**
- the electric motor is an electrically commutated permanent-magnet electric motor, wherein the rotor (2) exhibits bipolar permanent magnetization,
- the multipartite stator (1) further comprises two central parts (15) which each form one of the pole shoes (9, 10) which are arranged centrally between the first side (5) and the second side (8) of the rotor (2), and
- the coils (3, 4) are arranged on the first side (5) of the rotor (2) and the coils (6, 7) are arranged on the second side (8) of the rotor (2) on in each case one of the lateral pole shoes (13, 14) which each merge in one piece with one of the side parts (16, 17) of the stator,
- the side parts (16, 17) are compressed with the central parts (15) of the stator, and
- the side parts (16, 17) are designed such that the coils (3, 7, 4, 6) do not protrude beyond an iron core of the stator (1) in the direction of the rotor rotation axis.

2. Two-phase electric motor according to Claim 1,
**characterized in that** the coils (3, 7, 4, 6) are wound and interconnected such that when a current flow in a first direction (+, -) is established in a coil (3, 7, 4, 6) in a cross section which is averted from the rotor (2), a current flow is established in the same, first direction (+, -) in a cross section of the coil (3, 7, 4, 6) which faces the rotor (2) in the diagonally arranged coil (3, 7, 4, 6) which belongs to the same phase (A, B), so that, for example, when the current flow in a cross section of a coil (3), which cross section is averted from the rotor (2), establishes a current flow in the first positive (+) direction, the current flow of the coil (7) in the cross section which faces the rotor (2) is likewise positive (+).

3. Two-phase electric motor according to at least one of the preceding claims,
**characterized in that** the stator (1) is constructed from laminations, wherein the connections between the laminations are preferably of pronged design.

4. Two-phase electric motor according to at least one of the preceding claims,
**characterized in that** the stator (1) is constructed from pressed parts, in particular sintered parts.

5. Air-conditioning flap of a motor vehicle, comprising an electric motor as actuating drive,
**characterized in that** the electric motor as actuating drive of the air-conditioning flap is formed by a two-phase electric motor according to at least one of the preceding claims.

## Revendications

1. Moteur électrique biphasé, comprenant un stator (1) porte-bobine et un rotor (2), le moteur électrique présentant une forme rectangulaire, une première bobine (3) et une deuxième bobine (4) étant disposées sur un premier côté (5) du rotor (2) et une troisième bobine (6) et une quatrième bobine (7) étant disposées sur le deuxième côté (8) du rotor (2), à l'opposé du premier côté (5), de sorte que les quatre bobines (3, 4, 6, 7) forment ensemble un rectangle, les bobines disposées diagonalement opposées, c'est-à-dire la première bobine (3) et la quatrième bobine (7) d'une part et la deuxième bobine (4) et la troisième bobine (6) d'autre part, étant respectivement reliées électriquement l'une à l'autre, de sorte qu'elles forment respectivement une phase (A, B) commune, deux pièces polaires (9, 10) étant formées au centre entre le premier côté (5) et le deuxième côté (8) du rotor (2), une ligne de liaison (11) entre les points centraux des deux pièces polaires (9, 10) se trouvant à angle droit avec une ligne de liaison (12) entre les points centraux des deux côtés (5, 8) du rotor (2), deux pièces polaires (13, 14) supplémentaires latérales étant disposées au niveau des côtés (5, 8) du rotor (2), de sorte qu'au total quatre pièces polaires (9, 10, 13, 14) enveloppent le rotor (2) sur une grande partie de son pourtour,
- le stator (1) étant construit en plusieurs parties et comportant une première partie latérale (16) et une deuxième partie latérale (17), la première partie latérale (16) étant configurée pour accueillir la première et la deuxième bobine (3, 4) au niveau du premier côté (5) du rotor (2) et la deuxième partie latérale (17) étant configurée pour accueillir la troisième et la quatrième bobine (6, 7) au niveau du deuxième côté (8) du rotor (2),
**caractérisé en ce que**
- le moteur électrique est un moteur électrique à aimant permanent commuté, le rotor (2) ayant une magnétisation permanente bipolaire,
- le stator (1) en plusieurs parties comporte en outre deux parties centrales (15) qui forment respectivement une pièce polaire (9, 10) qui est disposée au centre entre le premier côté (5) et le deuxième côté (8) du rotor (2), et
- les bobines (3, 4) au niveau du premier côté (5) du rotor (2) et les bobines (6, 7) au niveau du deuxième côté (8) du rotor (2) sont respectivement disposées sur l'une des pièces polaires (13, 14) latérales qui se fondent respectivement d'un seul tenant dans l'une des parties latérales (16, 17) du stator,
- les parties latérales (16, 17) sont compressées avec les parties centrales (15) du stator, et
- les parties latérales (16, 17) sont configurées de telle sorte que les bobines (3, 7, 4, 6) ne font pas saillie d'un noyau en fer du stator (1) en direction de l'axe de rotation du rotor.

2. Moteur électrique biphasé selon la revendication 1, **caractérisé en ce que** les bobines (3, 7, 4, 6) sont bobinées et connectées de telle sorte que lorsqu'un flux de courant s'établit dans une première direction (+, -) dans une bobine (3, 7, 4, 6) dans une section transversale à l'opposé du rotor (2), un flux de courant s'établit dans la même première direction (+, -) au niveau de la bobine (3, 7, 4, 6) disposée en diagonale faisant partie de la même phase (A, B), dans une section transversale, faisant face au rotor (2), de la bobine (3, 7, 4, 6), de sorte que lorsque le flux de courant qui s'établit dans une section transversale d'une bobine (3) à l'opposé du rotor (2) est un flux de courant dans la première direction positive (+), par exemple, le flux de courant de la bobine (7) dans la section transversale qui fait face au rotor (2) est alors également positif (+).

3. Moteur électrique biphasé selon au moins l'une des revendications précédentes, **caractérisé en ce que** le stator (1) est constitué de tôles, les liaisons entre les tôles étant de préférence exécutées galvanisées.

4. Moteur électrique biphasé selon au moins l'une des revendications précédentes, **caractérisé en ce que** le stator (1) est constitué de pièces embouties, notamment de pièces frittées.

5. Volet de climatisation d'un véhicule automobile, comprenant un moteur électrique en tant que mécanisme de commande, **caractérisé en ce que** le moteur électrique en tant que mécanisme de commande du volet de climatisation est formé par un moteur électrique biphasé selon au moins l'une des revendications précédentes.
